# EUROPÄISCHE PATENTSCHRIFT

(11) **EP 3 277 645 B1**
(45) Veröffentlichungstag und Bekanntmachung des Hinweises auf die Patenterteilung: **07.07.2021**
(21) Anmeldenummer: 16714354.4
(22) Anmeldetag: 31.03.2016
(51) Int. Cl.: B28B 1/00, C04B 35/565, C04B 35/571, C04B 35/624

(54) **VERFAHREN ZUM HERSTELLEN EINES SILIZIUMCARBID-HALTIGEN KÖRPERS**
PROCESS FOR PRODUCING A SILICON CARBIDE-CONTAINING BODY
PROCÉDÉ DE FABRICATION D'UN CORPS CONTENANT DU CARBURE DE SILICIUM

(30) Priorität: 01.04.2015 DE 102015105085
(43) Veröffentlichungstag der Anmeldung: 07.02.2018
(73) Patentinhaber: Universität Paderborn, 33098 Paderborn (DE)
(72) Erfinder: GREULICH-WEBER, Siegmund, 33175 Bad Lippspringe (DE)
(74) Vertreter: Michalski Hüttermann & Partner Patentanwälte mbB
(86) Internationale Anmeldenummer: PCT/EP2016/057000
(87) Internationale Veröffentlichungsnummer: WO 2016/156453

(56) Entgegenhaltungen:
- KEVIN JAKUBENAS ET AL: "Silicon Carbide from Laser Pyrolysis of Polycarbosilane", JOURNAL OF THE AMERICAN CERAMIC SOCIETY., Bd. 78, Nr. 8, 1. August 1995 (1995-08-01) , Seiten 2263-2266, XP055201359, US ISSN: 0002-7820, DOI: 10.1111/j.1151-2916.1995.tb08653.x
- B Y Stevinson ET AL: "SUPPORT-FREE INFILTRATION OF SELECTIVE LASER SINTERED (SLS) SILICON CARBIDE PREFORMS", , 14. August 2006 (2006-08-14), Seiten 359-366, XP055240077, Gefunden im Internet: URL:http://sffsymposium.engr.utexas.edu/Ma nuscripts/2006/2006-33-Stevinson.pdf [gefunden am 2016-01-11]
- Bettina Friedel ET AL: "Alternative Routes to Porous Silicon Carbide", MRS Online Proceedings Library, 1. Januar 2008 (2008-01-01), XP055280004, DOI: 10.1557/PROC-1069-D01-03 Gefunden im Internet: URL:https://www.researchgate.net/profile/B ettina_Friedel/publication/231956906_Alter native_Routes_to_Porous_Silicon_Carbide/li nks/546c92630cf2c4819f2299a0.pdf?origin=pu blication_detail [gefunden am 2016-06-13]
- MOTT M ET AL: "SOLID FREEFORMING OF SILICON CARBIDE BY INKJET PRINTING USING A POLYMERIC PRECURSOR", JOURNAL OF THE AMERICAN CERAMIC SOCIETY, BLACKWELL PUBLISHING, MALDEN, MA, US, Bd. 84, Nr. 2, 1. Februar 2001 (2001-02-01), Seiten 307-313, XP001039143, ISSN: 0002-7820

## Beschreibung

Die vorliegende Erfindung betrifft ein Verfahren zum Herstellen eines Siliziumcarbidhaltigen Körpers.

Oftmals sind Körper, wie etwa Bauteile oder Teile davon, hohen thermischen, mechanischen oder chemischen Beeinflussungen ausgesetzt. Derartige Körper sollten deshalb aus stabilen und verlässlichen Materialien geformt sein. Dabei können derartige Körper eine leicht herzustellende Form aufweisen oder auch Abmessungen oder eine Geometrie, welche hohe Anforderungen an die Herstellung des Körpers richtet. Ein Herstellungsverfahren, welches eine Kombination der vorgenannten Eigenschaften eines Körpers ermöglicht, ist dabei oftmals schwierig durchführbar und/oder kostenintensiv.

Aus dem Dokument US 2013/0327265 A1 ist beispielsweise ein Verfahren zum Herstellen eines Siliziumcarbid-Kristalls bekannt. Bei einem derartigen Verfahren wird eine Mischung aus Kohlenstoffpartikeln und Siliziumpartikeln erzeugt. Die Mischung wird anschließend auf eine Temperatur von wenigstens 2000°C erhitzt, um so Siliziumcarbid zu erhalten. Das Siliziumcarbid wird pulverisiert und durch Sublimation und Rekristallisation wird Siliziumcarbid des Typs 6H erhalten.

Das Dokument JP 2010207845 A beschreibt ferner ein Verfahren zum Bearbeiten eines Substrats aus einem Siliziumcarbid-Einkristall. Dabei wird beschrieben, dass auf einen derartigen Einkristall ein Siliziumbasiertes Pulver aufgebracht wird und zur Erzeugung einer Nut Laserstrahlung auf den beschichteten Bereich eingestrahlt wird.

Aus dem Dokument JP 2009173501 A ist ferner ein Verfahren zum Erzeugen eines Siliziumcarbid-Einkristalls und eines Siliziumcarbidpulvers bekannt. Hierzu werden eine Siliziumquelle und eine Kohlenstoffquelle als Ausgangssubstanzen verwendet und einer Temperaturbehandlung von 2100°C bis 2500°C unterworfen.

Kevin Jakubenas et al., Silicon Carbide from Laser Pyrolysis of Polycarbosilane, J. Am. Chem. Soc, 78(8) 2263-2266 (1995), beschreibt das Herstellen SiC-haltiger Körper durch eine Pyrolyse eines polymeren Ausgangsmaterials. Das Ausgangsmaterial ist dabei Polycarbosilan (PCS), welches alleine und mit einem Füller verwendet wird und welches bei Temperaturen von beispielsweise 1500°C umgesetzt wird. Dabei wird ein selektives Lasersintern als additives Fertigungsverfahren angewendet, indem mehrere Lagen nacheinander selektiv mit einem Laserstrahl behandelt werden.

B.Y. Stevinson et al., Support-free infiltration of selective laser sintered (SLS) silicon carbide preforms, XP055240077, 14. August 2006, Seiten 359-366, beschreibt ein selektives Lasersinterverfahren, insbesondere mit nachfolgender Herstellung eines reaktionsgebundenen Silizium-infiltrierten Siliziumcarbid (RBSiC). Bei diesem Verfahren wird eine SiC-haltige Ausgangsform mit einem Harz versetzt und einem SLS-Verfahren unterworfen. Anschließend wird die Form mit Silizium versetzt erneut erhitzt etwa auf eine Temperatur von 1650°C, wobei sich Silizium-infiltriertes Siliziumcarbid bildet.

B. Friedel, Alternative Routes to Porous Silicon Carbide, Mater. Res. Symp. Proc. Vol 1069, 2008, (D3) beschreibt das Herstellen von Siliciumcarbid durch eine Sol-Gel-Synthese.

Es besteht jedoch noch weiterhin Verbesserungspotential bei der Herstellung von Siliziumcarbid-enthaltenden Körpern. Insbesondere besteht weiteres Verbesserungspotential hisichtlich der Einfachheit und Kostengünstigkeit des Herstellungsverfahrens auch gering dimensionierter und komplexer Abmessungen beziehungsweise Geometrien.

Es ist daher die Aufgabe der vorliegenden Erfindung, eine Lösung zu schaffen, durch welche auf einfache und kostengünstige Weise Siliziumcarbid-enthaltende Körper auch mit geringen Abmessungen und komplexen Geometrien hergestellt werden können.

Die Lösung der Aufgabe erfolgt erfindungsgemäß durch ein Verfahren zum Herstellen eines Siliziumcarbid-enthaltenden Körpers mit den Merkmalen des Anspruchs 1. Bevorzugte Ausgestaltungen der Erfindung sind in den Unteransprüchen, in der Beschreibung, in der Figur und dem Beispiel offenbart, wobei weitere in den Unteransprüchen oder in der Beschreibung oder der Figur oder dem Beispiel beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Es wird ein Verfahren zum Herstellen eines Siliziumcarbid-enthaltenden Körpers vorgeschlagen, welches die Verfahrensschritte aufweist:
a) Bereitstellen eines Gemisches mit einer Silizium quelle und einer Kohlenstoffquelle, wobei die Siliziumquelle und die Kohlenstoffquelle gemeinsam in Partikeln eines Feststoffgranulats vorliegen und wobei die Siliziumquelle reines Silizium oder Siliziumdioxid ist und die Kohlenstoffquelle reiner Kohlenstoff ist;
b) Anordnen einer Schicht des bei Verfahrensschritt a) bereitgestellten Gemisches auf einem Träger, wobei die Schicht des Gemisches eine vordefinierte Dicke aufweist; und
c) Lokal begrenztes Behandeln des in Verfahrensschritt b) angeordneten Gemisches mit einer Temperatur in einem Bereich von ≥ 1400°C bis < 2000°C nach einem vorbestimmten räumlichen Muster, wobei das vorbestimmte räumliche Muster ausgewählt ist basierend auf der räumlichen Ausgestaltung des zu erzeugenden Körpers und wobei durch eine Reaktion der Kohlenstoffquelle mit der Siliziumquelle Siliziumcarbid hergestellt wird.

Durch ein vorbeschriebenes Verfahren lässt sich ein Körper aus Siliziumcarbid mit guten Stabilitätseigenschaften besonders einfach herstellen, wobei auch geringe Abmessungen und komplexe Geometrien problemlos ausbildbar sind.

Im Detail umfasst das Verfahren zunächst gemäß Verfahrensschritt a) das Bereitstellen eines Gemisches mit einer Siliziumquelle und einer Kohlenstoffquelle, wobei die Siliziumquelle und die Kohlenstoffquelle gemeinsam in Partikeln eines Feststoffgranulats vorliegen.

Insbesondere kann es somit bevorzugt sein, dass jedes der Partikel des Feststoffgranulats eine Kohlenstoffquelle und eine Siliziumquelle aufweist. Die Siliziumquelle und die Kohlenstoffquelle dienen dazu, in dem weiteren Verfahren durch eine Reaktion der Kohlenstoffquelle mit der Siliziumquelle Siliziumcarbid herstellen zu können.

Die Siliziumquelle und die Kohlenstoffquelle sind derart gewählt, dass diese bei den nachfolgend beschriebenen Bedingungen, insbesondere bei den folgenden Temperaturen, etwa bei Normaldruck (1bar), durch das vorbeschriebene Verfahren Siliziumcarbid ausbilden können.

Die Siliziumquelle ist reines Silizium oder Siliziumdioxid und die Kohlenstoffquelle ist reiner Kohlenstoff, wobei die Feststoffpartikel beispielsweise durch einen Sol-/Gel-Prozess ausbildbar sind, wie dies nachstehend im Detail beschrieben ist. Beispielsweise können die Feststoffpartikel aus Silizium, Kohlenstoff und gegebenenfalls einem Dotierstoff oder mehreren Dotierstoffen, wie dies nachfolgend beschrieben ist, bestehen, oder zumindest den größten Teil, etwa in einem Bereich von ≥ 90Gew.-% ausmachen.

Gemäß Verfahrensschritt b) umfasst das Verfahren weiterhin das Anordnen einer Schicht des Gemisches auf einem Träger, wobei das Gemisch in einer vordefinierten Dicke vorliegt. Somit wird gemäß diesem Verfahrensschritt das bei Verfahrensschritt a) bereitgestellte Gemisch auf einem Träger beziehungsweise Substrat angeordnet, welches als Auflage dient, auf welcher das Gemisch in Verfahrensschritt c) einer Temperaturbehandlung unterworfen wird, wie dies nachstehend im Detail beschrieben ist.

Die Ausgestaltung des Trägers ist dabei grundsätzlich frei wählbar, insoweit er den nachfolgend beschriebenen Reaktionsbedingungen standhält. Die Dimensionen des Trägers und dabei insbesondere seiner Auflagefläche sind dabei vorteilhaft zu wählen in Abhängigkeit des herzustellenden Körpers beziehungsweise seiner Ausmaße. Beispielsweise kann der Träger tellerartig ausgestaltet sein oder eine tellerartige Trageoberfläche aufweisen. Um bei den nachfolgenden Reaktionsbedingungen stabil zu bleiben und das sich bildende Produkt nicht negativ zu beeinflussen, kann der Träger, wie etwa zumindest seine Trageoberfläche, also die mit dem Gemisch in Kontakt kommende Oberfläche, besonders vorteilhaft aus Siliziumcarbid oder auch aus einem anderen keramischen Material ausgestaltet sein. Beispielsweise kann der Träger eine Siliziumcarbid-Scheibe aufweisen. In dieser Ausgestaltung kann es von Vorteil sein, dass die erzeugte Siliziumcarbid-Struktur an dem Träger anhaftet, da so das weitere Herstellungsverfahren, wie etwa das Lösen des nicht umgesetzten Gemisches von dem hergestellten Körper vereinfacht werden kann. Darüber hinaus kann so sichergestellt werden, dass bei einem Aufbringen einer darauf folgenden Schicht des Gemisches die behandelte Schicht an ihrer Position verbleibt. Dies kann beispielsweise von Vorteil sein, da es grundsätzlich möglich ist, die neue Schicht des Gemisches mit einem Wischmechanismus aufzubringen.

Darüber hinaus ist die Dicke der aufgebrachten Schicht des Gemisches ebenfalls im Wesentlichen frei wählbar. Insbesondere kann die Schichtdicke gewählt werden in Abhängigkeit der Körnung des Gemisches und der Abmessungen beziehungsweise Geometrie des herzustellenden Körpers, wie dies nachstehend im Detail erläutert wird.

Gemäß Verfahrensschritt c) umfasst das Verfahren weiterhin ein lokal begrenztes Behandeln des in Verfahrensschritt b) angeordneten Gemisches mit einer Temperatur in einem Bereich von ≥ 1400°C bis ≤ 2000°C, insbesondere in einem Bereich von ≥ 1600°C bis ≤ 1700°C, nach einem vorbestimmten räumlichen Muster, wobei das vorbestimmte räumliche Muster ausgewählt ist basierend auf der räumlichen Ausgestaltung des zu erzeugenden Körpers.

In diesem Verfahrensschritt erfolgt somit eine räumlich selektive Temperaturbehandlung des Gemisches, um auf diese Weise aus dem Gemisch Siliziumcarbid zu erzeugen. Hierzu erfolgt eine Behandlung des Gemisches mit einer Temperatur in einem Bereich von ≥ 1400°C bis ≤ 2000°C. Eine derartige Temperatur kann bereits sicher dafür sorgen, dass sich die Kohlenstoffquelle und die Siliziumquelle zu Siliziumcarbid umsetzen.

Insbesondere dadurch, dass das Gemisch derart ausgestaltet ist, dass die Partikel sowohl die Siliziumquelle als auch die Kohlenstoffquelle aufweisen, kann bereits eine derart niedrige Temperatur ausreichen, um so die gewünschte Bildung von Siliziumcarbid erreichen zu können. Dabei kann insbesondere durch die Ausgestaltung des Gemisches es ermöglicht werden, dass durch das innige Gemisch etwa auf atomarer Ebene von Silizium und Kohlenstoff in dem Feststoffgranulat bereits in einer durch die Temperaturbehandlung um die Partikel des Gemisches entstehende Gasphase unter Umständen Si₂C und SiC₂ vorliegen kann, was zu einer leichteren Bildung von Siliziumcarbid führt. Es kann also direkt ein Silizium-Kohlenstoff-Gas vorliegen, wobei in für den Fachmann verständlicher Weise auch andere Gaskomponenten vorliegen können. Somit kann durch die vergleichsweise geringe benötigte Temperatur das Verfahren einfach und kostengünstig durchführbar sein. Durch die Temperaturbehandlung erfolgt somit eine Umwandlung des Gemisches beziehungsweise der Kohlenstoffquelle und der Siliziumquelle zu Siliziumcarbid.

Dabei kann insbesondere durch die verwendeten Temperaturen es verhindert werden, dass, wie dies aus dem Stand der Technik bekannt ist, ein Sublimationsvorgang bei hohen Temperaturen erfolgt. Dies erlaubt eine einfachere Prozessführung und ferner das Verhindern von Materialverlusten durch Sublimation.

Bei dem hier beschriebenen Verfahren ist es ferner vorgesehen, dass die Temperaturbehandlung lokal begrenzt erfolgt und dabei insbesondere nach einem vorbestimmten räumlichen Muster, wobei das vorbestimmte Muster ausgewählt ist basierend auf der räumlichen Ausgestaltung des zu erzeugenden Körpers. In anderen Worten kann die Temperaturbehandlung derart durchgeführt werden, dass die Orte der Temperaturbehandlung dem räumlichen Muster des zu erzeugenden Körpers entsprechen beziehungsweise dieses wiederspiegeln.

Beispielsweise bei einem herzustellenden zweidimensionalen Körper beziehungsweise bei einer zweidimensionalen Struktur des Körpers mit einheitlicher Dicke kann dabei somit auf einfache Weise durch eine lokal selektive Bildung von Siliziumcarbid durch Umwandlung der Ausgangsstoffe in Siliziumcarbid eine lokal selektive Festigung des Gemisches beziehungsweise das Ausbilden einer festen Struktur im Bereich der Wärmebehandlung erfolgen, wobei die nicht durch eine Temperaturbehandlung umgesetzten Bereiche weiterhin als loses Pulver vorliegen. Dadurch kann nach einem Prozess das nicht umgesetzte Gemisch entfernt werden, wodurch eine feste Siliziumcarbid-Struktur verbleibt, die exakt den Bereichen der Temperaturbehandlung entspricht und dadurch aufgrund der Verwendung des räumlichen Musters den gewünschten herzustellenden Körper ausbildet. In anderen Worten kann durch eine Steuerung der Positionen der Temperaturbehandlung der Siliziumcarbid-haltige Körper hergestellt werden.

Dadurch, dass eine Steuerung der Temperaturbehandlung äußerst exakt möglich sein kann, können gleichermaßen die Positionen der Umwandlung und damit der Siliziumcarbid-Bildung sehr exakt gesteuert werden. Dadurch kann der herzustellende Körper auch sehr geringe Ausmaße aufweisen. Ferner sind auch komplexe Geometrien problemlos möglich, da die Herstellung der zu erzeugenden Struktur, wie bereits ausgeführt, nur durch die Position der räumlich begrenzten beziehungsweise räumlich selektiven Temperaturbehandlung möglich ist.

Die Rauigkeit des herzustellenden Körpers kann abhängen von der Partikelgröße und Form der Partikel, also etwa rundlich oder scheibenförmig, des Gemisches. Die Rauigkeit hängt außerdem von der Leistung der Wärmequelle und der Geschwindigkeit ab, mit der die Wärmequelle über das Gemisch gesteuert wird.

Dabei kann eine Steuerung der Position der Wärmebehandlung insbesondere auf elektronischen Strukturdaten des herzustellenden Produkts basieren. Dies macht eine Herstellung besonders einfach möglich und erlaubt auch eine besonders einfache Anpassbarkeit beziehungsweise eine problemlose Herstellung auch von verschiedensten Produkten in geringer Anzahl. Denn ein sich änderndes Produkt beziehungsweise ein sich ändernder Körper kann auf einfache Weise durch Bereitstellen neuer elektronischer Strukturdaten bereitgestellt werden, ohne jedoch aufwändige Umbaumaßnahmen an der Vorrichtung vornehmen zu müssen.

Durch die Ausbildung des Körpers aus Siliziumcarbid kann der Vorteil einer hohen Robustheit und Beständigkeit bei extremen Bedingungen wie etwa gegenüber einer Vielzahl von Chemikalien und Bedingungen, wie etwa gegenüber aggressiven Medien, beispielsweise Azeton, Säuren oder Laugen erreicht werden. Das hier beschriebene Verfahren bietet den Vorteil, dass der hier hergestellte Körper höchst resistent ist und ferner auch bei hohen Temperaturen gegebenenfalls auch unter Sauerstoffzugabe von weit über 1000°C, wie etwa bis über 1100°C an Sauerstoff und 1300°C im Vakuum, oder sogar weit darüber, wie etwa bis über 2000°C stabil sein kann. Ferner ist ein durch dieses Verfahren ausbildbarer Körper durch seine große Härte auch gegen mechanische Beeinflussungen sehr robust. Dadurch schafft das hier beschriebene Verfahren die Möglichkeit der Ausbildung eines Körpers nicht nur in einer hohen Exaktheit und auch bei komplizierten Geometrien beziehungsweise Abmessungen, sondern auch mit einer hohen Stabilität und Langlebigkeit.

Beispielhaft kann das gebildete Siliziumcarbid kristallin anfallen, wie etwa in der kristallinen Form 3C-SiC. Insbesondere durch ein derartiges Siliziumcarbid können die vorteilhaften Eigenschaften betreffend mechanische und chemische Robustheit weiter verbessert werden.

Insbesondere für Körper beziehungsweise Strukturen mit feinen Abmessungen beziehungsweise Geometrien und mit den vorgenannten Stabilitätseigenschaften und dabei insbesondere für Siliziumcarbid-enthaltende Körper sind aus dem Stand der Technik bekannte Herstellungsverfahren oftmals sehr kostenintensiv und aufwändig in der Prozessführung, wobei diese Nachteile des Stands der Technik durch das hier beschriebene Verfahren gerade vermieden werden können.

Zusammenfassend erlaubt das hier beschriebene Verfahren somit auf besonders einfache Weise, Strukturen aus Siliziumcarbid zu erzeugen, wobei auch kleinste Abmessungen und komplexe Geometrien problemlos ermöglicht werden können.

In einer bevorzugten Ausgestaltung ist es vorgesehen, dass Verfahrensschritt c) durchgeführt wird unter Verwendung eines Lasers. Beispielsweise können Nd:YAG Laser (Neodymdotierter Yttrium-Aluminium-Granat-Laser), CO₂-LASER, Faserlaser verwendet werden, wobei diese etwa mit einer Leistung von 100W betreibbar sein können. Insbesondere unter Verwendung eines Lasers, wie etwa eines IR-Lasers, kann aufgrund einer auch sehr gering einstellbaren Breite des Laserstrahls im Mikrometerbereich, etwa in einem Bereich von ≥ 1µm ≤ 10µm, aber auch bis in den Millimeterbereich, etwa bis ≤ 2mm oder gegebenenfalls auch darüber, eine hoch genaue beziehungsweise hoch präzise Temperaturbehandlung sogar im Mikrometerbereich erfolgen, so dass auch Strukturen mit geringsten Abmessungen problemlos ermöglicht werden können. Insbesondere kann durch das Verwenden eines Lasers nur exakt und in definierter Weise der gewollte Bereich des Gemisches einer Temperaturbehandlung unterzogen werden, wobei benachbarte Bereiche nicht umgesetzt werden, da durch einen Laser eine hochgenaue Wärmezufuhr ermöglicht werden kann. Darüber hinaus ist es unter Verwendung eines Lasers möglich, die einwirkende Temperatur höchst genau zu steuern, so dass sichergestellt werden kann, dass der gewünschte Temperaturbereich eingehalten wird und es beispielsweise sicher zu einer Umsetzung des Gemisches unter Bildung von Siliziumcarbid kommt, jedoch keine Sublimationseffekte auftreten. Dadurch kann verhindert werden, dass Material des Gemisches durch derartige Effekte verloren geht. Schließlich kann eine Lasersteuerung höchst genau erfolgen und kann das Gemisch mit einem Laser problemlos und höchstgenau abgefahren werden, so dass die Qualität insbesondere mit Bezug auf die gewünschte Form der Struktur besonders vorteilhaft einhaltbar ist.

In einer weiteren bevorzugten Ausgestaltung kann es vorgesehen sein, dass die Verfahrensschritte b) und c) mehrfach hintereinander durchgeführt werden. Somit wird mehrfach hintereinander, insbesondere wenigstens zweimal hintereinander, zunächst eine Schicht des Gemisches auf dem Träger angeordnet und anschließend einer definierten Temperaturbehandlung unterworfen, wobei bei jeder der nacheinander aufgebrachten Schichten des Gemisches eine Behandlung mit einer Temperatur in einem Bereich von ≥ 1400°C bis ≤ 2000°C, insbesondere mit einer Temperatur in einem Bereich von ≥ 1600°C bis ≤ 1700°C, erfolgt, jeweils nach einem vorbestimmten räumlichen Muster, wobei das vorbestimmte Muster ausgewählt ist basierend auf der räumlichen Ausgestaltung des zu erzeugenden Körpers. Somit werden die Verfahrensschritte b) und c) insbesondere jeweils als zusammenhängende Verfahrensschritte beziehungsweise als Paket der Verfahrensschritte b) und c) wiederholt. In dieser Ausgestaltung kann somit nicht nur eine zweidimensionale Struktur sondern vielmehr eine dreidimensionale Struktur erzielt werden. Somit kann in dieser Ausgestaltung im Wesentlichen jede Struktur beziehungsweise jeder Körper dargestellt werden. Beispielsweise unter Verwendung eines Lasers kann das Verfahren in dieser Ausgestaltung somit ähnlich einem SLM-Verfahren (Selective Laser Melting) beziehungsweise einem 3D-Drucken ablaufen. In anderen Worten wurde überraschender Weise gefunden, dass insbesondere in dieser Ausgestaltung Körper beziehungsweise Strukturen mit einer sehr hohen Genauigkeit und unter Erzeugung beliebiger Geometrien beziehungsweise Größen erzeugt werden können. Dadurch können durch das Erzeugen von Siliziumcarbid-Strukturen auf einfache und kostengünstige Weise höchst genau sehr stabile und robuste Körper erhalten werden, wie dies vorstehend erläutert ist.

In einer weiteren bevorzugten Ausgestaltung ist es vorgesehen, dass zwischen zwei nacheinander durchgeführten Verfahrensschritten c) der Abstand zwischen dem Träger und einer Wärmequelle zum Behandeln des Gemisches mit einer Temperatur in einem Bereich von ≥ 1400°C bis ≤ 2000°C vergrößert wird. Insbesondere wird somit der Abstand zwischen Träger und Wärmequelle, wie etwa einem Laser, zwischen zwei Verfahrensschritten c) vergrößert, wobei dieser zusätzliche Schritt erfolgen kann vor oder nach dem erneuten Aufbringen von Gemisch gemäß Verfahrensschritt b). Das Ausmaß der Vergrößerung des Abstands kann dabei gewählt insbesondere auf Basis der Dicke der aufgebrachten Schicht. In dieser Ausgestaltung kann es auf einfache Weise ermöglicht werden, dass die auf das Gemisch wirkenden Temperaturen und Beeinflussungen bei jeder aufgebrachten Schicht im Wesentlichen gleich sind, ohne jedoch die Stärke beziehungsweise Leistung der Wärmequelle anpassen zu müssen. Dadurch kann es ermöglicht werden, dass eine Struktur entsteht, welche in ihrer gesamten Ausdehnung die gleichen Eigenschaften aufweist und dadurch höchst definiert ist. Diese Ausgestaltung kann beispielsweise realisierbar sein durch einen entsprechend verfahrbaren Träger oder durch eine entsprechend verfahrbare Wärmequelle, etwa durch einen entsprechend verfahrbaren Laser. Durch die Verfahrbarkeit sollte in für den Fachmann verständlicher Weise der Abstand zwischen Träger beziehungsweise Gemisch und Wärmequelle vergrößerbar sein. Beispielsweise kann der Träger als verfahrbarer Stempel beziehungsweise Kolben in einem Zylinder ausgestaltet sein, wobei der Zylinder einen Reaktor ausbilden kann.

Es kann vorteilhaft sein, dass das hier beschriebene Verfahren einen weiteren Zwischenschritt aufweist. Insbesondere kann es vorgesehen sein, dass vor Verfahrensschritt b) eine Trennschicht zum zumindest teilweisen Trennen des herzustellenden Siliziumcarbid-enthaltenden Körpers von dem Träger auf den Träger aufgebracht wird. Somit kann es vorgesehen sein, dass eine Schicht auf den Träger aufgebracht wird, die nach einem beendeten Verfahren zwischen dem erzeugten Körper und dem Träger vorliegt, den Körper somit zumindest teilweise von dem Träger trennt. Dadurch kann zum Einen gegebenenfalls ein einfaches Ablösen des Körpers von dem Träger erfolgen. Darüber hinaus kann die untere Oberfläche des Körpers ausgebildet werden unabhängig von der Oberfläche des Trägers. Dadurch können die Anforderungen an den Träger gesenkt werden.

Beispielsweise kann die Zwischenschicht ebenfalls ein Feststoffgranulat sein, oder kann die Zwischenschicht eine fest zusammenhängende Schicht sein. Insbesondere kann die Zwischenschicht vor Verfahrensschritt b) nicht fest mit dem Träger verbunden sein beziehungsweise lose auf diesem liegen. Beispielsweise kann die Trägerschicht aus einem Material geformt sein, welches den in dem vorliegenden Verfahren angewandten Temperaturen stabil ist. Beispielsweise können Sand oder Kohlenstoffpulver hier genannt werden.

Weiterhin kann es vorteilhaft sein, dass als Trennschicht eine Schicht des Gemisches auf den Träger aufgebracht wird, wobei die Trennschicht lokal begrenzt mit einer Temperatur in einem Bereich von ≥ 1400°C bis ≤ 2000°C behandelt wird, um wenigstens eine Verbindung von dem Träger zu dem herzustellenden Siliziumcarbid-enthaltenden Körper auszubilden. Somit kann es vorgesehen sein, dass wenigstens eine Verbindung, insbesondere eine Mehrzahl an Verbindungen, zwischen dem herzustellenden Körper und dem Träger erzeugt werden, wobei jedoch weitere Bereiche des Körpers von dem Träger getrennt sind. In anderen Worten kann es vorgesehen sein, dass vor Verfahrensschritt c) ein lokal begrenztes Behandeln von auf dem Träger angeordnetem Gemisch mit einer Temperatur in einem Bereich von ≥ 1400°C bis ≤ 2000°C erfolgt, um wenigstens eine Verbindung von dem Träger zu dem herzustellenden Siliziumcarbid-enthaltenden Körper auszubilden. Diese wenigstens eine Verbindung ist somit ebenfalls aus Siliziumcarbid ausgestaltet und fixiert den Körper an dem Träger. Beispielsweise ist die wenigstens eine Verbindung in Form einer Stelze ausgestaltet.

Die wenigstens eine Verbindung kann im Anschluss an das hier beschriebene Verfahren problemlos von dem Körper und dem Träger entfernt werden. Vorteilhaft an der Erzeugung wenigstens einer derartigen Verbindung kann es wiederum insbesondere sein, dass die Rauigkeit beziehungswiese Ebenheit des Körpers insbesondere an der dem Träger zugewandten Oberfläche nicht abhängig ist von der Oberfläche des Trägers. Dadurch können die Anforderungen an den Träger gesenkt werden und dieser kann problemlos und ohne weitere Behandlung mehrfach wieder verwendet werden.

In einer weiteren bevorzugten Ausgestaltung kann es vorgesehen sein, dass wenigstens Verfahrensschritt c) zumindest teilweise unter einem Schutzgas durchgeführt wird. In dieser Ausgestaltung kann es insbesondere verhindert werden, dass das gebildete Siliziumcarbid oxidiert wird und sich somit beispielsweise Siliziumoxid an der Oberfläche bildet. Dadurch kann eine sehr definierte und qualitativ hochwertige Struktur erzeugt werden. Deren gezielte Entfernung ist durch eine unmittelbare Anwendbarkeit gerade nicht notwendig, Auf einen derartigen zusätzlichen Schritt kann gemäß der vorliegenden Erfindung gerade verzichtet werden, was das Verfahren besonders kostengünstig machen kann. Darüber hinaus kann insbesondere bei einer Verwendung von Schutzgas es ermöglicht werden, dass eine hohe Reinheit kombiniert werden kann mit einer guten thermischen Leitfähigkeit und, insoweit keine Dotierung stattfindet, guten Isolierfähigkeit beziehungsweise, insoweit eine Dotierung stattfindet, einer guten elektrischen Leitfähigkeit. Unter einem Schutzgas ist dabei ein derartiges Gas zu verstehen, welches das gebildete Produkt nicht verändert beziehungsweise eine Reaktion mit diesem eingeht. Beispielhaft kann als Schutzgas Argon Verwendung finden und weiterhin beispielhaft kann eine Behandlung unter Schutzgas eine Sauerstoff-freie und Stickstoff-freie Behandlung bedeuten.

In einer weiteren bevorzugten Ausgestaltung kann es vorgesehen sein, dass zumindest ein Verfahrensschritt unter Verwendung eines Dotierstoffes durchgeführt wird. In dieser Ausgestaltung kann der hergestellte Körper zumindest teilweise dotiert werden und damit zumindest teilweise elektrisch leitfähig sein. Dies kann das Anwendungsgebiet des erzeugten Produkts signifikant erhöhen. Durch eine Dotierung kann ferner auf besonders definierte und einstellbare Weise in Abhängigkeit von Art und Menge des Dotierstoffes die Leitfähigkeit eingestellt werden, so dass eine besonders gute Anpassbarkeit gegeben ist. Dabei kann der gesamte erzeugte Körper dotiert werden, oder der Körper kann nur teilweise dotiert werden, also dotierte und nicht dotierte Bereiche aufweisen.

Mit Bezug auf eine Dotierung kann es ferner vorgesehen sein, dass wenigstens Verfahrensschritt c) teilweise unter einem Schutzgas und teilweise unter einem Gas aufweisend einen gasförmigen Dotierstoff durchgeführt wird oder dass wenigstens Verfahrens schritt c) teilweise unter einem Gas aufweisend einen ersten gasförmigen Dotierstoff durchgeführt wird und dass wenigstens Verfahrensschritt c) teilweise unter einem Gas aufweisend einen zweiten gasförmigen Dotierstoff durchgeführt, wobei auch bei zwei unterschiedlichen Dotierstoffen Verfahrensschritt c) zumindest teilweise mit einem Schutzgas beziehungsweise Inertgas durchgeführt werden kann. In dieser Ausgestaltung ist es auf besonders definierte Weise möglich, den erzeugten Körper nur teilweise zu dotieren und so beispielsweise elektrisch leitfähige Bereiche in elektrisch nicht oder signifikant weniger leitenden Bereichen einzubetten, oder umgekehrt. Ferner ist es möglich, unterschiedlich dotierte Bereiche, gegebenenfalls neben nicht dotierten Bereichen, auszubilden. Auf diese Weise kann eine funktionale Integrierung unterschiedlicher Bereiche in ein einstückiges Werkstück bereits bei der Herstellung realisiert werden. Dies ist dabei möglich ohne zusätzliche Arbeitsschritte, was die Prozessführung vereinfachen und Kosten senken kann. Darüber hinaus wird der hergestellte Körper in seiner Stabilität durch eine derartige funktionale Integrierung nicht negativ beeinflusst.

In einer weiteren bevorzugten Ausgestaltung ist es vorgesehen, dass das in Verfahrensschritt a) bereitgestellte Gemisch zumindest teilweise eine Siliziumquelle, eine Kohlenstoffquelle und einen Dotierstoff aufweist, wobei die Siliziumquelle und die Kohlenstoffquelle und der Dotierstoff gemeinsam in Partikeln eines Feststoffgranulats vorliegen. Mit Bezug auf den Dotierstoff kann dieser ausgewählt werden auf Basis der gewünschten Dotierung. Der oder die Dotierstoffe können hierbei in grundsätzlich frei wählbarer Form, etwa in einem Herstellungsprozess des Feststoffgranulats als lösliche Verbindung beigegeben werden oder etwa elementar, beispielsweise metallisch, addiert werden. Somit kann der Dotierstoff ebenfalls Bestandteil sein des Feststoffgranulats gemäß Verfahrensschritt a). In dieser Ausgestaltung kann eine Dotierung prozesstechnisch sehr einfach erfolgen und kann die Menge des Dotierstoffes ferner sehr genau einstellbar sein.

Ferner kann es in dieser Ausgestaltung ermöglicht werden, dass das in Verfahrensschritt a) bereitgestellte Gemisch teilweise derart ausgestaltet ist, dass die Siliziumquelle und die Kohlenstoffquelle gemeinsam in Partikeln eines Feststoffgranulats vorliegen und die Partikel keinen Dotierstoff aufweisen, und dass das Gemisch ferner teilweise derart ausgestaltet ist, dass die Siliziumquelle und die Kohlenstoffquelle gemeinsam mit einem Dotierstoff in Partikeln des Feststoffgranulats vorliegen. Weiterhin kann es vorgesehen sein, dass das Gemisch teilweise derart ausgestaltet ist, dass die Siliziumquelle und die Kohlenstoffquelle gemeinsam mit einem ersten Dotierstoff in Partikeln des Feststoffgranulats vorliegen und dass das Gemisch ferner teilweise derart ausgestaltet ist, dass die Siliziumquelle und die Kohlenstoffquelle gemeinsam mit einem zweiten Dotierstoff in Partikeln des Feststoffgranulats vorliegen. Dabei kann weiterhin ein Teil des Gemisches vorliegen, welches keinen Dotierstoff aufweist.

Auch in dieser Ausgestaltung kann der Vorteil einer funktionalen Integration von dotierten und nicht dotierten Bereichen oder von unterschiedlich dotierten Bereichen gegebenenfalls ebenfalls neben nicht dotierten Bereichen in einer Struktur beziehungsweise in einem Körper bereits bei der Herstellung realisiert werden, was die vorgenannten Vorteile ermöglicht. Dabei kann die Anordnung des Gemisches beziehungsweise der Partikel mit und ohne Dotierstoff oder mit unterschiedlichen Dotierstoffen entsprechend dem vorbestimmten räumlichen Muster erfolgen, so dass auf einfache Weise eine vorbestimmte Anordnung dotierter und nicht dotierter Bereiche durch eine entsprechende Anordnung des Gemisches ermöglicht werden kann.

Mit Bezug auf mögliche jedoch in keiner Weise beschränkende Dotierungsmaterialien können für eine n-Dotierung bevorzugt Phosphor (P) oder Stickstoff (N) verwendet werden, oder können für eine p-Dotierung Bor (B) oder Aluminium (Al) verwendet werden. Durch die Dotierung kann dabei eine besonders gute elektrische Leitfähigkeit des Siliziumcarbids beziehungsweise des Körpers eingestellt werden.

Beispielsweise kann, insoweit der Dotierstoff nicht in dem Feststoffgranulat aufweisend die Kohlenstoffquelle und die Siliziumquelle vorhanden ist, der Dotierstoff etwa als Gas in einen Reaktor gegeben werden, in welchem zumindest Verfahrensschritt c) durchgeführt wird. Dies kann insbesondere dann von Vorteil sein, wenn der Dotierstoff als Gas vorliegen kann, wobei der Dotierstoff beim Wachstum des Siliziumcarbids in die Struktur eingebaut wird. Beispielsweise kann in diesem Fall gasförmiger Stickstoff als Dotierstoff dienen.

Von Vorteil ist es insbesondere bei Bereitstellung des Dotierstoffes in den Partikeln des Gemisches gemäß Verfahrensschritt a), wenn die Dotierungsmaterialien im nasschemischen Teil einer nachfolgend im Detail beschriebenen Sol-Gel-Synthese eingebracht werden, wodurch die Dotierungsmaterialien während der thermischen Behandlung in das wachsende Siliziumcarbid eingebaut werden können. Die Dotierungsmaterialien können hierbei entweder als lösliche Verbindung beigegeben werden oder metallisch addiert werden. Alternativ ist es wie vorstehend beschrieben aber auch denkbar, dass die Dotierung des sich bildenden Siliziumcarbids während der thermischen Behandlung über die Gasphase vorgenommen wird. Als Dotierungsmaterialien können wiederum bevorzugt Phosphor (P) oder Stickstoff (N) beziehungsweise Bor (B) oder Aluminium (Al) verwendet werden.

Eine n-Dotierung kann etwa mit Stickstoff (beispielhafte Additive: Salpetersäure, Ammoniumchlorid, Kaliumnitrat oder Melamin), oder mit Phosphor (beispielhafte Additive: Kaliumdihydrogenphosphat oder Di-Natrium- hydrogenphosphat) erfolgen. Eine p-Dotierung kann beispielhaft mit Bor (beispielhafte Additive: Di-Natriumtetraborat) oder mit Aluminium (Add.: Aluminiumpulver) erfolgen. Die Dotierstoffe können, wie dies nachstehend erläutert ist, dem Sol beigegeben werden, die Mengen sind abhängig von dem konkreten Additiv und der gewünschten Dotierkonzentration.

Bei beiden Verfahren ist die Eindiffusion der Dotierelemente in benachbarte Bereiche wegen der geringen Diffusionseigenschaften in Siliziumcarbid praktisch nicht möglich. Die Bereiche unterschiedlicher Dotierung oder dotierte und nicht dotierte Bereiche bleiben somit scharf getrennt.

In einer weiteren bevorzugten Ausgestaltung des vorbeschriebenen Verfahrens kann es vorgesehen sein, dass das in Verfahrensschritt a) bereitgestellte Gemisch bereitgestellt wird unter Verwendung eines Sol-Gel-Prozesses. Unter einem Sol-Gel-Prozess ist dabei in an sich bekannter Weise ein derartiger Prozess zu verstehen, bei dem Ausgangsstoffe der zu erzeugenden Verbindung, die sogenannten Präkursoren, in einem Lösungsmittel vorliegen, wobei dieses Gemisch als Sol bezeichnet wird. Im Verlaufe des Verfahrens bildet sich durch insbesondere thermische Trocknung beziehungsweise Alterung ein sogenanntes Gel aus, woraus durch weitere Behandlung, insbesondere Temperaturbehandlung, ein Feststoff entstehen kann. Dieser Feststoff kann somit durch die Auswahl der Präkursoren definiert werden und enthält die Kohlenstoffquelle und die Siliziumquelle für die Siliziumcarbidbildung und kann ferner gegebenenfalls einen Dotierstoff zum Dotieren des Siliziumcarbids enthalten, welcher bereits bei der Zubereitung des Sols zugegeben werden kann.

Auch der Sol-Gel-Prozess kann dabei vollständig oder zumindest teilweise in einer Schutzatmosphäre, wie insbesondere in einer Argonatmosphäre, ablaufen.

Insbesondere mit Bezug auf eine Ausgestaltung des vorbeschriebenen Verfahrens durch einen Sol-Gel-Prozesses kann es vorgesehen sein, dass der Sol-Gel-Prozess zumindest die folgenden Verfahrensschritte aufweist:
d) Bereitstellen eines Präkursorgemisches mit einem Siliziumpräkursor, einem Kohlenstoffpräkursor und gegebenenfalls einem Dotierstoff, wobei das Präkursorgemisch in einem Lösungsmittel vorliegt;
e) Behandeln des Präkursorgemisches bei insbesondere zu der Raumtemperatur (22°C) erhöhter Temperatur unter Trocknung des Präkursorgemisches; und
f) gegebenenfalls Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C.

Gemäß Verfahrensschritt d) können somit zunächst die Präkursoren bereitgestellt werden, welche zu einem Feststoff verarbeitet werden und anschließend als Kohlenstoffquelle beziehungsweise als Siliziumquelle dienen können, die in Verfahrensschritt a) bereitgestellt beziehungsweise verwendet werden. Die Wahl der Siliziumquelle beziehungsweise der Kohlenstoffquelle beziehungsweise des Silizium-Präkursors und des Kohlenstoff-Präkursors ist somit nicht grundsätzlich beschränkt. Bevorzugte Siliziumpräkursoren können beispielsweise Silikate, wie etwa Tetraethylorthosilikat (TEOS), umfassen, wohingegen bevorzugte Kohlenstoffpräkursoren Zucker, wie etwa Saccharose, umfassen können, um die Feststoffpartikel auszubilden, welche als Kohlstoffquelle und Siliziumquelle in Verfahrensschritt a) bereitgestellt beziehungsweise verwendet werden. Beispielsweise kann ein Gemisch aus Flüssigzucker und Tetraethylorthosilikat, gelöst in Ethanol, als Gemisch von Kohlenstoffpräkursor und Siliziumpräkursor bei Verfahrensschritt d) bereitgestellt werden, wobei die Erfindung in verständlicher Weise nicht auf die vorgenannten Beispiele beschränkt ist.

Dieses kann gemäß Verfahrensschritt e) beispielsweise in einem Temperaturbereich nahe dem Siedepunkt des Lösungsmittels, bei der Verwendung von Ethanol etwa in einem Bereich von 60-70°C, unter Luftabschluss zum Gelieren gebracht beziehungsweise gealtert werden, wobei es ferner bei einer Temperatur oberhalb des Siedepunkts getrocknet werden kann. Dabei kann es von Vorteil sein, wenn beim Trocknen des Feststoffes Partikel entstehen, die einen maximalen Durchmesser in einem Bereich von etwa ≥1 µm bis ≤ 2mm aufweisen. Die vorbenannten Größenbereiche haben dabei insbesondere prozesstechnische Vorteile und Vorteile bezüglich der Feinheit der herzustellenden Strukturen. Eine derartige Partikelgröße kann beispielsweise ermöglicht werden durch einen Rührvorgang während des Trocknens, wobei die Partikelgröße etwa einstellbar sein kann durch das verwendete Rührwerk, eine Umdrehungsgeschwindigkeit und die Dauer beziehungsweise Stärke des Rührens, wie dies dem Fachmann grundsätzlich bekannt ist. Somit bietet das Verfahren beispielsweise in der hier beschriebenen Ausgestaltung den Vorteil, dass das Gemisch bis in den Mikrometerbereich im Wesentlichen beliebig einstellbare Partikelgrößen verwenden kann, was bezüglich der Exaktheit der herzustellenden Körper und Prozessführung signifikante Vorteile mit sich bringen kann.

Gemäß Verfahrensschritt f) erfolgt anschließend gegebenenfalls ein Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C, beispielsweise von 1000°C. Durch diesen Verfahrensschritt kann der erzeugte Feststoff insbesondere von Verunreinigungen befreit werden, was das erzeugte Siliziumcarbid besonders rein gestalten kann. Dadurch kann die Qualität des erzeugten Siliziumcarbids beziehungsweise eines erzeugten Körpers besonders hoch und ferner definiert einstellbar sein.

Durch Verfahrens schritt e) beziehungsweise gegebenenfalls f) wird dabei das Gemisch gemäß Verfahrensschritt a) bereitgestellt beziehungsweise fertiggestellt, wobei durch den vorbeschriebenen Sol-Gel-Prozess Partikel entstehen können, die jeweils eine Siliziumquelle, reines Silizium oder Siliziumdioxid, und eine Kohlenstoffquelle, reinen Kohlenstoff, enthalten können. Bei Zusetzung eines Dotierstoffes während des Sol-Gel-Prozesses kann auch dieser in den Partikeln vorliegen, wie dies nachstehend im Detail beschrieben ist. Somit kann durch den Sol-Gel-Prozess ein Gemisch auf quasi atomarer Ebene ermöglicht werden, was die Herstellung von Siliziumcarbid deutlich vereinfacht und dabei insbesondere reduzierte Temperaturen bei der Umsetzung des Gemisches gemäß Verfahrensschritt c) erlauben kann.

Vorteilhaft in dieser Ausgestaltung kann es ferner sein, dass das eingesetzte Gemisch beziehungsweise dessen Partikel schwarz sind, was eine gute Absorption der Wärme, wie etwa der Laserstrahlung, ermöglichen kann und somit die Effektivität des Verfahrens weiter steigern beziehungsweise positiv beeinflussen kann.

Zusammenfassend kann somit in einer Ausgestaltung ein Sol-Gel-Verfahren Anwendung finden, bei dem die zu verarbeitenden Materialien miteinander eine Mischung in Form eines Gels bilden und anschließend getrocknet werden, und in einem weiteren Schritt in einer carbothermalen Reduktion das Ausbilden, beispielsweise Auskristallisieren, des Siliziumcarbids, abläuft. Der als Prozess an sich bekannte Sol-Gel-Prozess bietet eine gut beherrschbare und weit variierbare Möglichkeit der Herstellung unterschiedlichster Ausgangsmaterialien für die Herstellung des erfindungsgemäßen Körpers.

In einer weiteren bevorzugten Ausgestaltung kann es ferner vorgesehen sein, dass das in Verfahrensschritt a) bereitgestellte Gemisch beziehungsweise dessen Partikel eine Partikelgröße aufweist, die eingestellt ist basierend auf dem vorbestimmten räumlichen Muster. In dieser Ausgestaltung kann somit dem Rechnung getragen werden, dass insbesondere bei dem Ausbilden von Körpern beziehungsweise von Strukturen mit vergleichsweise geringen Abmessungen beziehungsweise mit einer feinstrukturierten Geometrie deren Exaktheit abhängig sein kann von der Partikelgröße des bereitgestellten Gemisches. Deshalb kann es vorgesehen sein, dass beispielsweise bei gröberen Strukturen die Partikelgröße vergleichsweise groß ist, wohingegen bei vergleichsweise feineren Strukturen eine geringere Partikelgröße verwendet wird. Einstellbar kann die Partikelgröße beispielsweise sein bei einem Rühren während Verfahrensschritt e), wie dies vorstehend bereits beschreiben ist.

In einer weiteren bevorzugten Ausgestaltung kann es ferner vorgesehen sein, dass die Dicke der Schicht des Gemisches gemäß Verfahrensschritt b) in einem Bereich von ≥ 1µm bis ≤ 10µm liegt. Insbesondere in dieser Ausgestaltung kann es ermöglicht werden, dass auch feinste Strukturen erzeugbar sind, wobei diese Ausgestaltung ferner prozesstechnisch gut ausbildbar sein kann. Darüber hinaus kann es beispielsweise unter Verwendung eines Lasers ermöglicht werden, dass jeweils nur die entsprechend oberste Schicht thermisch derart behandelt wird, dass eine Umwandlung zu beziehungsweise Kristallisierung von Siliziumcarbid stattfindet. Etwaige darunter liegende Schichten können jedoch unbehandelt bleiben, was unabhängig von der Schichtdicke insbesondere durch die Steuerung der Wärmequelle, wie etwa des Lasers, beispielsweise durch Steuerung der Verfahrgeschwindigkeit und Leistung der Wärmequelle, einstellbar sein kann. Darüber hinaus kann das Absorptionsverhalten des jeweiligen Gemisches ermittelt werden und ebenfalls in die Steuerung der Wärmequelle mit einfließen. Helfen kann dabei ebenfalls, dass das gebildete Siliziumcarbid einer tieferen Schicht, im Gegensatz zu den Ausgangsmaterialien, bis zu sehr hohen Temperaturen stabil ist und hier keine Umwandlung mehr stattfinden kann. Dadurch kann eine höchst genaue und höchst definierte Struktur erzeugbar sein kann.

Nachfolgend wird die Erfindung anhand von Figuren und anhand eines bevorzugten Ausführungsbeispiels exemplarisch erläutert, wobei die nachfolgend dargestellten Merkmale sowohl jeweils einzeln als auch in Kombination einen Aspekt der Erfindung darstellen können, und wobei die Erfindung nicht auf das nachfolgende Beispiel beschränkt ist.

Es zeigen:
Fig. 1 eine schematische Darstellung eines Siliziumcarbid-enthaltenden Körpers, der durch ein erfindungsgemäßes Verfahren herstellbar ist;
Fig. 2 eine schematische Darstellung eines ersten Schritts eines Verfahrens gemäß der vorliegenden Erfindung;
Fig. 3 eine schematische Darstellung eines weiteren Schritts eines Verfahrens gemäß der vorliegenden Erfindung;
Fig. 4 eine schematische Darstellung eines weiteren Schritts eines Verfahrens gemäß der vorliegenden Erfindung;
Fig. 5 eine schematische Darstellung eines weiteren Schritts eines Verfahrens gemäß der vorliegenden Erfindung;
Fig. 6 eine schematische Darstellung eines ersten Schritts eines Verfahrens gemäß der vorliegenden Erfindung;
Fig. 7 eine schematische Darstellung eines ersten Schritts eines Verfahrens gemäß der vorliegenden Erfindung;
Fig. 8 eine schematische Darstellung eines ersten Schritts eines Verfahrens gemäß der vorliegenden Erfindung; und
Fig. 9 eine schematische Darstellung eines ersten Schritts eines Verfahrens gemäß der vorliegenden Erfindung.

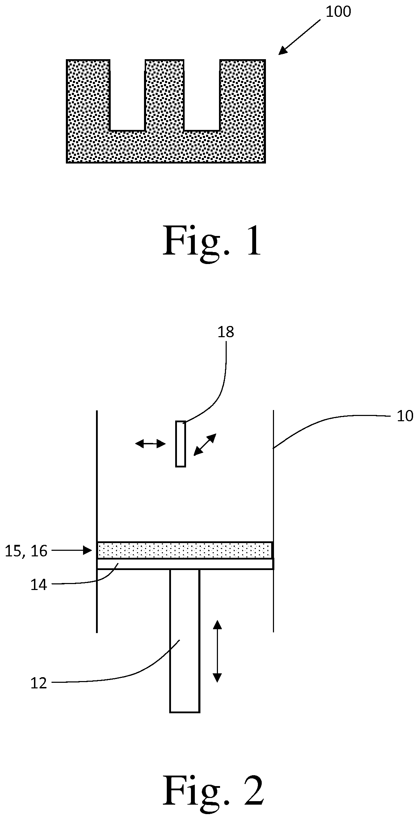

In der Figur 1 ist eine schematische Darstellung eines Siliziumcarbid-enthaltenden Körpers 100 gezeigt, der durch ein erfindungsgemäßes Verfahren herstellbar ist. Beispielsweise besteht der Köper 100 aus Siliziumcarbid. Der Körper 100 kann grundsätzlich im Wesentlichen jede beliebige Form und Geometrie aufweisen und ist dabei durch seine Ausgestaltung aus Siliziumcarbid äußerst robust gegen chemische und/oder mechanische und/oder thermische Einflüsse. Beispielsweise kann der Körper 100 aus kristallinem Siliziumcarbid ausgestaltet sein und dabei etwa in der Form 3C-SiC vorliegen.

In der Figur 2 ist ein erster Schritt eines erfindungsgemäßen Verfahrens zum Herstellen des Körpers 100 schematisch dargestellt. In der Figur 2 ist ein Reaktor 10 gezeigt, der beispielsweise gasdicht abschließbar sein kann und mit einem Inertgas, wie etwa Argon, oder einem ein Dotierstoff enthaltendem Gas, wie etwa Stickstoff, befüllt werden kann. In dem Reaktor 10 ist ein Träger 12 vorgesehen, der eine Trägerplatte 14 aufweist, die als Auflage für ein Gemisch 16 dienen kann. Das Gemisch 16 umfasst eine Siliziumquelle und eine Kohlenstoffquelle und gegebenenfalls einen Dotierstoff, wobei die Siliziumquelle und die Kohlenstoffquelle und gegebenenfalls der Dotierstoff gemeinsam in Partikeln eines Feststoffgranulats vorliegen. Es ist ferner ein Laser 18 vorgesehen, welcher Laserstrahlung 20 emittieren kann.

In der Figur 2 ist dabei gezeigt, dass das Gemisch 16 zunächst eine Zwischenschicht 15 ausbildet, welche dazu vorgesehen ist, den zu erzeugenden Körper 100 zumindest teilweise von dem Träger 12 zu trennen.

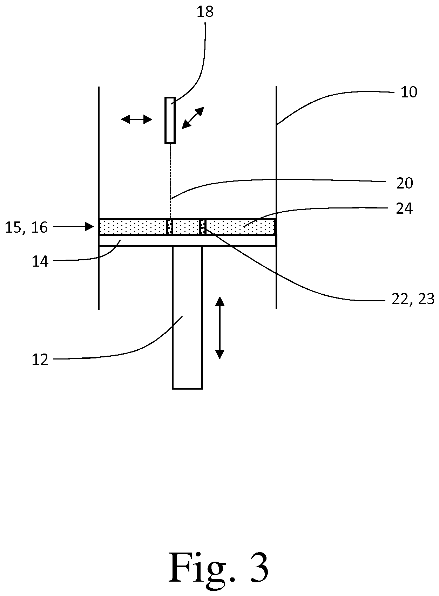

Figur 3 zeigt, dass die Laserstrahlung 20 das Gemisch 16 der Zwischenschicht 15 thermisch behandeln kann. Im Detail ist es vorgesehen, dass ein lokal begrenztes Behandeln des in Verfahrensschritt b) angeordneten Gemisches 16 mit einer Temperatur in einem Bereich von ≥ 1400°C bis ≤ 2000°C erfolgt. Durch das Einwirken der Laserstrahlung 20 auf das Gemisch 16 wird dieses erhitzt, wobei sich aus dem Gemisch 16 Siliziumcarbid in behandelten Bereichen 22 ausbildet, wohingegen in unbehandelten Bereichen 24, also in Bereichen, welche durch den Laserstrahl nicht behandelt werden, weiterhin das Gemisch 16 vorliegt. In der hier gezeigten Ausgestaltung bilden die in Figur 3 entstehenden behandelten Bereiche 22 jeweils Verbindungen 23 aus, welche den herzustellenden Körper 100 an dem Träger 12 beziehungsweise an der Trägerplatte 14 fixieren, wobei in den unbehandelten Bereichen 24 eine Trennung zwischen Körper 100 und Träger 12 vorgesehen ist.

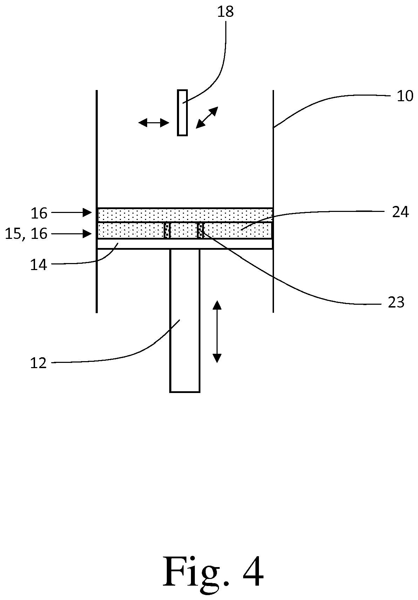

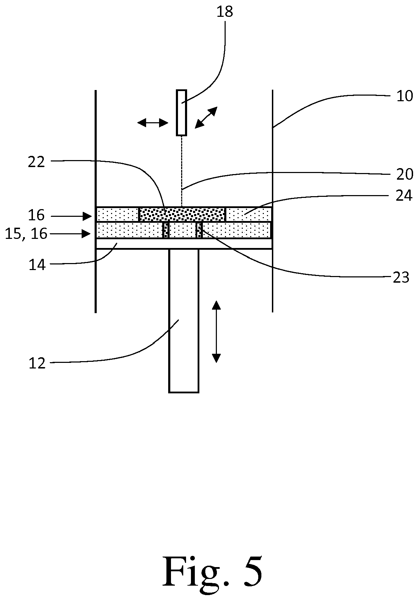

In der Figur 4 ist gezeigt, dass eine weitere Schicht des Gemisches 16 auf die Zwischenschicht 15 aufgetragen wird. Dazu kann vor dem Aufbringen der weiteren Schicht des Gemisches 16 oder vor der Temperaturbehandlung der Träger 12 beziehungsweise die Trägerplatte 14 verlagert werden derart, dass sich der Abstand zu dem Laser 18 vergrößert, insbesondere um den Betrag der Dicke der neu aufgebrachten Schicht. Hierzu ist der Träger 12 beziehungsweise die Trägerplatte 14 insbesondere verfahrbar ausgestaltet, wie dies durch den Pfeil dargestellt werden soll. Mit dieser Schicht beginnt die Herstellung des Körpers 100. Dazu erfolgt, wie dies in der Figur 5 gezeigt ist, ein lokal begrenztes Behandeln des Gemisches 16 beziehungsweise der obersten Schicht hiervon mit einer Temperatur in einem Bereich von ≥ 1400°C bis ≤ 2000°C nach einem vorbestimmten räumlichen Muster, wobei das vorbestimmte räumliche Muster ausgewählt ist basierend auf der räumlichen Ausgestaltung des zu erzeugenden Körpers 100. Hierzu kann, wie auch für die Herstellung der Verbindungen 23, der Laser 18 zweidimensional insbesondere in einer Ebene parallel zu der Ausrichtung der Trägerplatte 14 beziehungsweise in einer Ebene rechtwinklig zu der Ausbreitungsrichtung der Laserstrahlung 20 verfahrbar sein, wie dies durch die Pfeile dargestellt werden soll.

Durch das Einwirken der Laserstrahlung 20 auf das Gemisch 16 wird dieses wiederum erhitzt, wobei sich aus dem Gemisch 16 Siliziumcarbid in behandelten Bereichen 22 ausbildet, wohingegen in unbehandelten Bereichen 24, also in Bereichen, welche durch den Laserstrahl 20 nicht behandelt werden, weiterhin das Gemisch 16 vorliegt.

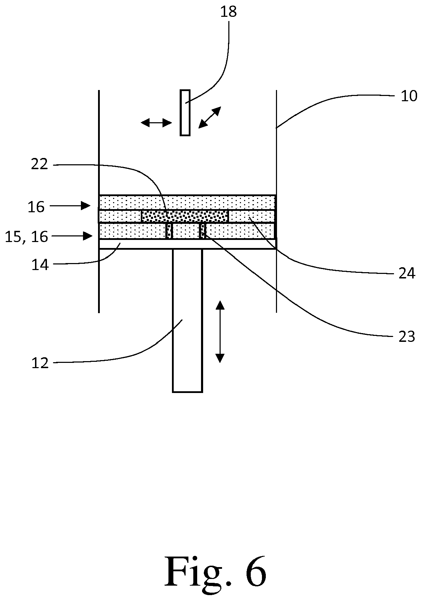

In der Figur 6 ist gezeigt, dass nach der Temperaturbehandlung des Gemisches 16 auf die behandelte Schicht des Gemisches 16 eine weitere Schicht aufgebracht wird, welche ebenfalls durch den Laser 18 lokal begrenzt und in Abhängigkeit eines zu erzeugenden Körpers behandelt werden kann. Dazu kann vor dem Aufbringen der weiteren Schicht des Gemisches 16 oder vor der Temperaturbehandlung der Träger 12 beziehungsweise die Trägerplatte 14 wiederum verlagert werden derart, dass sich der Abstand zu dem Laser 18 vergrößert, insbesondere um den Betrag der Dicke der neu aufgebrachten Schicht. Hierzu ist der Träger 12 beziehungsweise die Trägerplatte 14 insbesondere verfahrbar ausgestaltet, wie dies durch den Pfeil dargestellt werden soll.

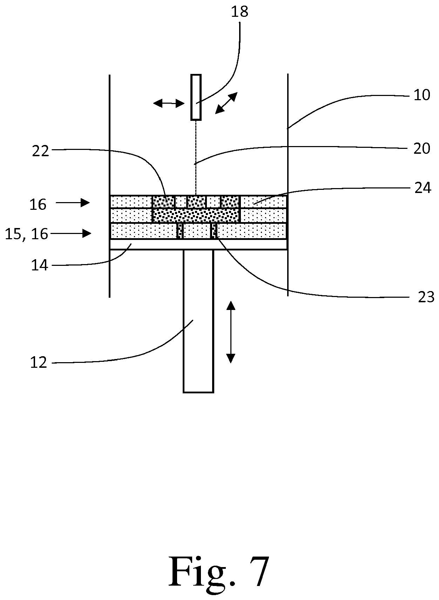

Durch die weitere Temperaturbehandlung durch den Laser 18 beziehungsweise die Laserstrahlung 20 kann auch in der weiteren Schicht lokal begrenzt Siliziumcarbid ausgestaltet werden, wie dies in Figur 7 gezeigt ist.

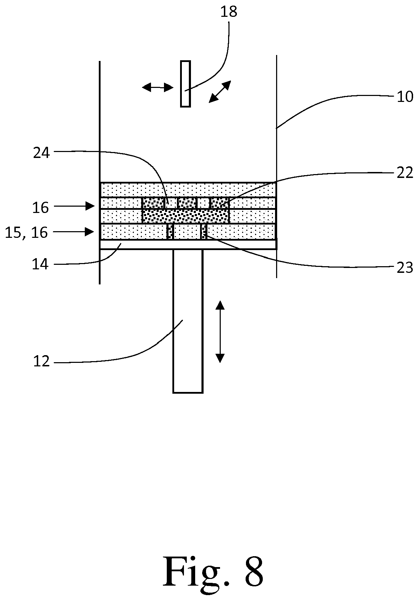

In der Figur 8 ist ein weiterer Verfahrensschritt gezeigt, bei welchem nach der Temperaturbehandlung des Gemisches auf die behandelte Schicht des Gemisches 16 eine weitere Schicht aufgebracht wird, welche ebenfalls durch den Laser 18 lokal begrenzt und in Abhängigkeit eines zu erzeugenden Körpers behandelt werden kann. Dazu kann vor dem Aufbringen der weiteren Schicht des Gemisches 16 oder vor der Temperaturbehandlung der Träger 12 beziehungsweise die Trägerplatte 14 wiederum verlagert werden derart, dass sich der Abstand zu dem Laser 18 vergrößert, insbesondere um den Betrag der Dicke der neu aufgebrachten Schicht.

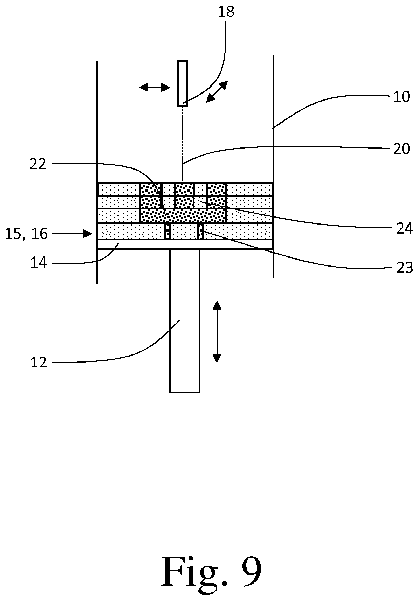

Durch die weitere Temperaturbehandlung durch den Laser 18 beziehungsweise die Laserstrahlung 20 kann auch in der weiteren Schicht lokal begrenzt Siliziumcarbid ausgestaltet werden, wie dies in Figur 9 gezeigt ist.

Durch eine im Wesentlichen beliebige Struktur der Behandlung der einzelnen Schichten des Gemisches 16 kann der Siliziumcarbid-enthaltende Körper 100 ausgestaltet werden, der den behandelten Bereichen 22 in der Figur 6 entsprechen kann. Die unbehandelten Bereiche 24 umfassen im Wesentlichen nur das unbehandelte Gemisch 16, welches auf einfache Weise von dem Körper 100 entfernt werden kann. Dadurch kann der Körper 100 auf einfache Weise fertiggestellt werden, indem ferner die Verbindungen 23 entfernt werden können.

Ein beispielhaftes Verfahren zum Erzeugen eines derartigen Körpers 100 ist in dem folgenden Ausführungsbeispiel beschrieben.

### Ausführungsbeispiel

Das nachstehend beschriebene Beispiel bezieht sich auf das Herstellen eines Siliziumcarbid-enthaltenden Körpers 100 unter Verwendung eines Sol-Gel-Prozesses zum Ausbilden des Ausgangsgemisches 16.

Herstellung des Sol-Gel-Si-C-Präkursors: Im Folgenden wird die chemische Zusammensetzung, Sol-Gel-Aufbereitung mit verschiedenen Trocknungsschritten bei 70°C bis 200°C, sowie abschließende Gewinnung des Si-C-Feststoffgranulates bei 1000°C beschrieben.

Flüssigzucker, Tetraethylorthosilikat und Ethanol werden zu einem Sol vermischt und bei 60 - 70°C unter Luftabschluss zum Gelieren gebracht. Die Zusammensetzung für einen Ansatz betrug (a) eine kolloidale Suspension aus 135g Tetraethylorthosilikat (TEOS) in 168,7g Ethanol gelöst als Siliziumquelle und (b) eine Lösung aus 68g Sacharose als Kohlenstoffquelle, in 75g destilliertem Wasser, der 37,15g Salzsäure (HCl) als Katalysator zum Ausbilden von Invertzucker hinzugefügt wird. Anschließend wurde Lösung (a) mit dem Flüssigzucker (b) unter Rühren miteinander vermischt. Alternativ kann anstatt der Lösung (b) auch direkt Flüssigzucker (Invertzucker, 122g 70%ig) verwendet werden. Dann wird kein Wasser zugesetzt und nur sehr wenig Salzsäure (5.2g), da diese nur noch zum Start des Gelierprozesses benötigt wird. Dieses Sol wird bei 50°C gealtert und anschließend bei 150 - 200°C getrocknet.

Um vergleichsweise gröberes Granulat im Bereich einiger einige 10 µm oder darunter zu erhalten, erfolgt bei dem Altern und/oder bei dem Trocknen zeitweises Rühren. Dieses Granulat beziehungsweise Pulver wird von verbliebenen ungewünschten Reaktionsprodukten bei 1000°C im Stickstoff- oder Argon-Gasstrom befreit und abschließend ggf. gemahlen.

Es kann eine Modifikation des SiC-Präkursors zum Zweck der Dotierung von SiC-Nanofasern erfolgen. Eine n-Dotierung kann etwa mit Stickstoff (beispielhafte Additive: Salpetersäure, Ammoniumchlorid, Kaliumnitrat oder Melamin), oder mit Phosphor (beispielhafte Additive: Kaliumdihydrogenphosphat oder Di-Natrium- hydrogenphosphat) erfolgen. Eine p-Dotierung kann beispielhaft mit Bor (beispielhafte Additive: Di-Natriumtetraborat) oder mit Aluminium (Add.: Aluminiumpulver) erfolgen. Die Dotierstoffe werden dem Sol beigegeben, die Mengen sind abhängig von dem konkreten Additiv und der gewünschten Dotierkonzentration.

Das so erzeugte Gemisch kann durch eine Wärmebehandlung mit einer Temperatur in einem Bereich von ≥ 1400°C bis ≤ 2000°C zu Siliziumcarbid umgewandelt werden, wodurch ein Siliziumcarbid-haltiger Körper ausgebildet werden kann. Im Detail kann ein n-dotiertes Gemisch mit einer Körnung von 2 mm mit dem Strahl eines Faser-Lasers, gepumpt durch Hochleistungs-Laserdioden, in einem Volumen von etwa 8 mm3, auf etwa 1600 bis 1700°C für etwa 0,2 Sekunden aufgeheizt. Das zuvor schwarze Gemisch-Pulver wird massives grünes 3C-SiC.

## Patentansprüche

1. Verfahren zum Herstellen eines Siliziumcarbid-enthaltenden Körpers (100), **dadurch gekennzeichnet**, das Verfahren die Verfahrensschritte aufweist:
a) Bereitstellen eines Gemisches (16) mit einer Siliziumquelle und einer Kohlenstoffquelle, wobei die Siliziumquelle und die Kohlenstoffquelle gemeinsam in Partikeln eines Feststoffgranulats vorliegen und wobei die Siliziumquelle reines Silizium oder Siliziumdioxid ist und die Kohlenstoffquelle reiner Kohlenstoff ist;
b) Anordnen einer Schicht des bei Verfahrensschritt a) bereitgestellten Gemisches (16) auf einem Träger (12), wobei die Schicht des Gemisches (16) eine vordefinierte Dicke aufweist; und
c) Lokal begrenztes Behandeln des in Verfahrensschritt b) angeordneten Gemisches (16) mit einer Temperatur in einem Bereich von ≥ 1400°C bis ≤ 2000°C nach einem vorbestimmten räumlichen Muster, wobei das vorbestimmte räumliche Muster ausgewählt ist basierend auf der räumlichen Ausgestaltung des zu erzeugenden Körpers (100) und wobei durch eine Reaktion der Kohlenstoffquelle mit der Siliziumquelle Siliziumcarbid hergestellt wird.

2. Verfahren nach Anspruch 1, **dadurch gekennzeichnet, dass** Verfahrensschritt c) durchgeführt wird unter Verwendung eines Lasers (18).

3. Verfahren nach Anspruch 1 oder 2, **dadurch gekennzeichnet, dass** die Verfahrensschritte b) und c) mehrfach hintereinander durchgeführt werden.

4. Verfahren nach Anspruch 3, **dadurch gekennzeichnet, dass** zwischen zwei nacheinander durchgeführten Verfahrensschritten c) der Abstand zwischen dem Träger (12) und einer Wärmequelle zum Behandeln des Gemisches (16) mit einer Temperatur in einem Bereich von ≥ 1400°C bis ≤ 2000°C vergrößert wird.

5. Verfahren nach einem der Ansprüche 1 bis 4, **dadurch gekennzeichnet, dass** vor Verfahrensschritt b) eine Trennschicht (15) zum zumindest teilweisen Trennen des herzustellenden Siliziumcarbid-enthaltenden Körpers (100) von dem Träger (12) auf den Träger (12) aufgebracht wird.

6. Verfahren nach Anspruch 5, **dadurch gekennzeichnet, dass** als Trennschicht (15) eine Schicht des Gemisches (16) auf den Träger (12) aufgebracht wird, wobei die Trennschicht (15) lokal begrenzt mit einer Temperatur in einem Bereich von ≥ 1400°C bis ≤ 2000°C behandelt wird, um wenigstens eine Verbindung von dem Träger (12) zu dem herzustellenden Siliziumcarbid-enthaltenden Körper (100) auszubilden.

7. Verfahren nach einem der Ansprüche 1 bis 6, **dadurch gekennzeichnet, dass** wenigstens Verfahrensschritt c) zumindest teilweise unter einem Schutzgas durchgeführt wird.

8. Verfahren nach einem der Ansprüche 1 bis 7, **dadurch gekennzeichnet, dass** zumindest ein Verfahrensschritt unter Verwendung eines Dotierstoffes durchgeführt wird.

9. Verfahren nach Anspruch 8, **dadurch gekennzeichnet, dass** wenigstens Verfahrensschritt c) teilweise unter einem Schutzgas und teilweise unter einem Gas aufweisend einen gasförmigen Dotierstoff durchgeführt wird, oder dass wenigstens Verfahrensschritt c) teilweise unter einem Gas aufweisend einen ersten gasförmigen Dotierstoff und teilweise unter einem Gas aufweisend einen zweiten gasförmigen Dotierstoff durchgeführt.

10. Verfahren nach einem der Ansprüche 1 bis 9, **dadurch gekennzeichnet, dass** das in Verfahrensschritt a) bereitgestellte Gemisch (16) zumindest teilweise eine Siliziumquelle, eine Kohlenstoffquelle und einen Dotierstoff aufweist, wobei die Siliziumquelle und die Kohlenstoffquelle und der Dotierstoff gemeinsam in Partikeln eines Feststoffgranulats vorliegen.

11. Verfahren nach Anspruch 10 **dadurch gekennzeichnet, dass** das in Verfahrensschritt a) bereitgestellte Gemisch (16) teilweise derart ausgestaltet ist, dass die Siliziumquelle und die Kohlenstoffquelle gemeinsam in Partikeln eines Feststoffgranulats vorliegen und die Partikel keinen Dotierstoff aufweisen, und dass das Gemisch (16) ferner teilweise derart ausgestaltet ist, dass die Siliziumquelle und die Kohlenstoffquelle gemeinsam mit einem Dotierstoff in Partikeln des Feststoffgranulats vorliegen, oder dass das Gemisch (16) teilweise derart ausgestaltet ist, dass die Siliziumquelle und die Kohlenstoffquelle gemeinsam mit einem ersten Dotierstoff in Partikeln des Feststoffgranulats vorliegen und dass das Gemisch (16) ferner teilweise derart ausgestaltet ist, dass die Siliziumquelle und die Kohlenstoffquelle gemeinsam mit einem zweiten Dotierstoff in Partikeln des Feststoffgranulats vorliegen.

12. Verfahren nach einem der Ansprüche 1 bis 11, **dadurch gekennzeichnet, dass** das in Verfahrensschritt a) bereitgestellte Gemisch (16) bereitgestellt wird unter Verwendung eines Sol-Gel-Prozesses.

13. Verfahren nach Anspruch 12, **dadurch gekennzeichnet, dass** der Sol-Gel-Prozess zumindest die folgenden Verfahrensschritte aufweist:
d) Bereitstellen eines Präkursorgemisches mit einem Siliziumpräkursor, einem Kohlenstoffpräkursor und gegebenenfalls einem Dotierstoff, wobei das Präkursorgemisch in einem Lösungsmittel vorliegt;
e) Behandeln des Präkursorgemisches bei erhöhter Temperatur unter Trocknung des Präkursorgemisches; und
f) gegebenenfalls Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C.

14. Verfahren nach einem der Ansprüche 1 bis 13, **dadurch gekennzeichnet, dass** das in Verfahrensschritt a) bereitgestellte Gemisch (16) Partikel des Feststoffgranulat mit einer Partikelgröße aufweist, die eingestellt ist basierend auf dem vorbestimmten räumlichen Muster.

15. Verfahren nach einem der Ansprüche 1 bis 14, **dadurch gekennzeichnet, dass** die Dicke der Schicht des Gemisches (16) in einem Bereich von ≥ 1µm bis ≤ 10m liegt.

## Claims

1. Method for producing a silicon carbide-containing body (100), **characterized in that** the method comprises the process steps:
a) providing a mixture (16) with a silicon source and a carbon source, wherein the silicon source and the carbon source are present together in particles of a solid granular material and wherein the silicon source is pure silicon or silicon dioxide and the carbon source is pure carbon;
b) disposing a layer of the mixture (16) provided in process step a) on a carrier (12), wherein the layer of the mixture (16) has a predefined thickness; and
c) locally limited treating the mixture (16) disposed in process step b) at a temperature in a range from ≥ 1400°C to ≤ 2000°C according to a predetermined spatial pattern, wherein the predetermined spatial pattern is selected based on the spatial configuration of the body (100) to be produced and wherein silicon carbide is produced by a rection of the carbon source and the silicon source.

2. Method according to claim 1, **characterized in that** process step c) is carried out by use of a laser (18).

3. Method according to claim 1 or 2, **characterized in that** process steps b) and c) are repeatedly carried out in succession.

4. Method according to claim 3, **characterized in that** between two successively process steps c) the distance between the carrier (12) and a heat source for treating the mixture (16) with a temperature in a range from ≥ 1400°C to ≤ 2000°C is increased.

5. Method according to any one of claims 1 to 4, **characterized in that** prior to process step b) a separation layer (15) for at least partially separating the silicon carbide-containing body (100) to be produced from the carrier (12) is applied onto the carrier (12).

6. Method according to claim 5, **characterized in that** as a separation layer (15) a layer of the mixture (16) is applied onto the carrier (12), wherein said separation layer (15) is treated locally limited at a temperature in a range from ≥ 1400°C to ≤ 2000°C in order to form at least one connection from the carrier (12) to the silicon carbide-containing body (100) to be produced.

7. Method according to any one of claims 1 to 6, **characterized in that** at least process step c) is at least partly carried out under a protective gas.

8. Method according to any one of claims 1 to 7, **characterized in that** at least one process step is carried out by use of a dopant.

9. Method according to claim 8, wherein at least process step c) is carried out partly under a protective gas and partly under a gas comprising a gaseous dopant, or at least process step c) is carried out partly under a gas comprising a first gaseous dopant and partly under a gas comprising a second gaseous dopant.

10. Method according to any one of claims 1 to 9, **characterized in that** the mixture (16) provided in process step a) at least partially comprises a silicon source, a carbon source and a dopant, wherein the silicon source and the carbon source and the dopant are together present in particles of a solid granular material.

11. Method of claim 10, **characterized in that** the mixture (16) provided in process step a) is partially configured such that the silicon source and the carbon source are present together in particles of a solid granular material, and that the particles comprise no dopant, and that the mixture (16) is further partially configured such that the silicon source and the carbon source are present together with a dopant in particles of solid granular material or that the mixture (16) is partially configured such that the silicon source and the carbon source are present together with a first dopant in particles of the solid granular material and that the mixture (16) is further partially configured such that the silicon source and the carbon source are present together with a second dopant in particles of the solid granular material.

12. Method according to any one of claims 1 to 11, **characterized in that** the mixture (16) provided in process step a) is provided by use of a sol-gel process.

13. Method according to claim 12, **characterized in that** the sol-gel process comprises at least the following process steps:
d) providing a precursor mixture comprising a silicon precursor, a carbon precursor and optionally a dopant, wherein the precursor mixture is present in a solvent;
e) treating the precursor mixture at an elevated temperature under drying the precursor mixture; and
f) optionally heating the dried precursor mixture to a temperature in a range from ≥ 800°C to ≤ 1200°C, in particular in a range from ≥ 900°C to ≤ 1100°C.

14. Method according to any one of claims 1 to 13, **characterized in that** the mixture (16) provided in process step a) comprises particles of the solid granular material with a particle size which is set based on the predetermined spatial pattern.

15. Method according to any one of claims 1 to 14, **characterized in that** the thickness of the layer of the mixture (16) is in a range from ≥ 1 µm to ≤ 10 m.

## Revendications

1. Procédé de fabrication d'un corps (100) contenant du carbure de silicium, **caractérisé en ce que** le procédé présente les étapes de procédé suivantes :
a) la préparation d'un mélange (16) avec une source de silicium et une source de carbone, où la source de silicium et la source de carbone se présentent ensemble en particules de granulés solides et où la source de silicium est du silicium pur ou du dioxyde de silicium et la source de carbone est du carbone pur ;
b) le dépôt d'une couche du mélange (16) préparé dans l'étape de procédé a) sur un support (12), où la couche de mélange (16) présente une épaisseur prédéfinie ; et
c) le traitement limité localement du mélange (16) disposé dans l'étape de procédé b) à une température dans une plage ≥ 1400 °C à ≤ 2000 °C selon un modèle spatial prédéterminé, où le modèle spatial prédéterminé est choisi en se basant sur la conception spatiale du corps (100) à fabriquer et où du carbure de silicium est fabriqué par une réaction de la source de carbone avec la source de silicium.

2. Procédé selon la revendication 1, **caractérisé en ce que** l'étape de procédé c) est exécutée moyennant l'emploi d'un laser (18).

3. Procédé selon la revendication 1 ou la revendication 2, **caractérisé en ce que** les étapes de procédé b) et c) sont exécutées plusieurs fois l'une après l'autre.

4. Procédé selon la revendication 3, **caractérisé en ce qu'**entre deux étapes de procédé c) exécutées l'une après l'autre, l'intervalle entre le support (12) et une source de chaleur pour le traitement du mélange (16) est agrandi avec une température dans une plage ≥ 1400 °C à ≤ 2000 °C.

5. Procédé selon l'une des revendications 1 à 4, **caractérisé en ce qu'**avant l'étape de procédé b), une couche de séparation (15) pour la séparation au moins partielle du corps (100) contenant du carbure de silicium à fabriquer par rapport au support (12) est déposée sur le support (12).

6. Procédé selon la revendication 5, **caractérisé en ce qu'**une couche du mélange (16) servant de couche de séparation (15) est déposée sur le support (12), où la couche de séparation (15) est traitée de manière limitée localement avec une température dans une plage ≥ 1400 °C à ≤ 2000 °C afin de former au moins un composé du corps (100) contenant du carbure de silicium à fabriquer par le support (12).

7. Procédé selon l'une des revendications 1 à 6, **caractérisé en ce que** l'étape de procédé c) est effectuée au moins partiellement sous un gaz de protection.

8. Procédé selon l'une des revendications 1 à 7, **caractérisé en ce qu'**au moins une étape de procédé est effectuée moyennant l'emploi d'une substance de dopage.

9. Procédé selon la revendication 8, **caractérisé en ce que** l'étape de procédé c) est effectuée au moins partiellement sous un gaz de protection et partiellement sous un gaz présentant une substance de dopage sous forme gazeuse ou qu'au moins l'étape de procédé c) est exécutée partiellement sous un gaz présentent une première substance de dopage sous forme de gaz et partiellement sous un gaz présentant une deuxième substance de dopage sous forme de gaz.

10. Procédé selon l'une des revendications 1 à 9, **caractérisé en ce que** le mélange (16) préparé dans l'étape de procédé a) présente au moins partiellement une source de silicium, une source de carbone et une substance de dopage, où la source de silicium et la source de carbone et la substance de dopage se présentent ensemble en particules de granulés solides.

11. Procédé selon la revendication 10, **caractérisé en ce que** le mélange (16) préparé dans l'étape de procédé a) est au moins partiellement conçu de manière à ce que la source de silicium et la source de carbone se présentent ensemble en particules de granulés solides et les particules ne présentent aucune substance de dopage, et que le mélange (16) est en outre conçu de telle manière que la source de silicium et la source de carbone, ensemble avec une substance de dopage, se présentent en particules de granulés solides, et que le mélange (16) est conçu partiellement de telle manière que la source de silicium et la source de carbone, ensemble avec une première substance de dopage, se présentent en particules de granulés solides et que le mélange (16) est en outre partiellement conçu de sorte que la source de silicium et la source de carbone, ensemble avec une deuxième substance de dopage, se présentent en particules de granulés solides.

12. Procédé selon l'une des revendications 1 à 11, **caractérisé en ce que** le mélange (16) préparé dans l'étape de procédé a) est préparé moyennant l'emploi d'un processus sol-gel.

13. Procédé selon la revendication 12, **caractérisé en ce que** le processus sol-gel présente au moins les étapes de procédé suivantes :
d) la préparation d'un mélange de précurseurs avec un précurseur de silicium, un précurseur de carbone et éventuellement une substance de dopage, où le mélange de précurseurs est présent dans un solvant ;
e) le traitement du mélange de précurseurs à haute température moyennant un séchage du mélange de précurseurs ; et
f) éventuellement, le chauffage du mélange de précurseurs séché à une température dans une plage ≥ 800 °c à ≤ 1200 °C, notamment dans une plage ≥ 900 °C à ≤ 1100 °C.

14. Procédé selon l'une des revendications 1 à 13, **caractérisé en ce que** le mélange (16) préparé dans l'étape de procédé a) présente des particules de granulés solides avec une taille particulaire qui est fixée en se basant sur le modèle spatial prédéterminé.

15. Procédé selon l'une des revendications 1 à 14, **caractérisé en ce que** l'épaisseur de la couche du mélange (16) se situe dans une plage ≥ 1 µm à ≤ 10 µm.
